# DEMANDE DE BREVET EUROPEEN

(11) **EP 1 553 741 A1**
(43) Date de publication de la demande: **13.07.2005**
(21) Numéro de dépôt: 04290059.7
(22) Date de dépôt: 09.01.2004
(51) Int. Cl.: H04L 12/58, G06F 17/60, G06F 17/30

(54) **Serveur de messages pictogrammes dans un réseau de télécommunications**

(71) Demandeur: FRANCE TELECOM, 75015 Paris (FR)
(72) Inventeur: De Gouberville, Dominique, 22300 Lannion (FR)
(74) Mandataire: Joly, Jean-Jacques

(57) **Abrégé**

Ce serveur (S) comporte un dispositif centralisé d'aide à la rédaction de messages pictogrammes (PROG_SEL, BD), un dispositif centralisé de traduction de tels messages et des moyens de conversion (PROG_CONV) de ces messages selon un format choisi par son destinataire.

## Description

La présente invention se situe dans le domaine de l'échange de messages électroniques comportant des pictogrammes dans un réseau de télécommunications.

Plus précisément, l'invention vise un serveur et des procédés et dispositifs d'aide à la création, de traduction et de diffusion de tels messages.

On connaît, dans ce domaine, le logiciel "Inter-Comm" commercialisé par la société WIDGIT SOFTWARE LTD.

Celui-ci permet, après son installation sur un micro-ordinateur, d'assister un utilisateur pour la rédaction d'un message comportant des pictogrammes et autres symboles.

Ce logiciel permet ainsi d'assister les personnes souffrant d'analphabétisation ou n'ayant qu'une connaissance limitée de l'orthographe.

Selon une première fonctionnalité, le logiciel "Inter-Comm" comporte une bibliothèque de pictogrammes copiée sur le disque dur du micro-ordinateur, au moment de l'installation du logiciel, ces pictogrammes et symboles pouvant ultérieurement être insérés dans le texte d'un message.

Le logiciel "Inter-Comm" permet également la traduction simultanée au fil de l'eau d'un texte, au moyen de pictogrammes et symboles de la bibliothèque, les pictogrammes choisis symbolisant au mieux le sens du texte du message.

Cette utilisation du logiciel "Inter-Comm" est principalement adaptée à la création d'un courrier électronique destiné à un correspondant ayant des difficultés à lire un message textuel.

Le message, transmis au destinataire sous forme d'un courrier électronique (en anglais "e-mail") purement textuel, est en effet retranscrit, à réception, en pictogrammes et symboles, si le logiciel "Inter-Comm" est installé sur l'ordinateur du destinataire.

Le logiciel "Inter-Comm" est ainsi d'une grande aide aux personnes souffrant d'analphabétisation, à la fois pour la rédaction et la diffusion de messages électroniques. Il présente néanmoins plusieurs inconvénients.

Tout d'abord, le logiciel "Inter-Comm" doit être à la fois installé sur la machine de l'émetteur du message (pour sa rédaction) et sur la machine du destinataire du message (pour sa restitution).

Cette installation nécessite une mémoire importante pour le programme "Inter-Comm" proprement dit d'une part, mais aussi pour le stockage de la bibliothèque des pictogrammes et autres symboles.

La mise à jour de la bibliothèque de pictogrammes présente aussi une certaine lourdeur, au sens où les nouveaux pictogrammes de la bibliothèque doivent être copiés sur la machine de tous les utilisateurs.

L'invention vise à résoudre les problèmes précités.

A cet effet et selon un premier aspect, l'invention concerne un dispositif centralisé d'aide à la rédaction d'un message, ce dispositif d'aide étant susceptible d'être incorporé dans un serveur relié à un réseau de télécommunications.

Le dispositif d'aide suivant l'invention est caractérisé en ce qu'il comporte :
- des moyens de réception d'une requête en provenance d'un poste client connecté audit réseau ;
- une base de données comportant au moins un élément symbolique comprenant au moins un pictogramme, une image, une photographie ou un élément sonore ;
- des moyens d'envoi, vers le poste client et, sur réception de la requête précitée, d'au moins un élément symbolique pouvant être inséré par un utilisateur du poste client dans un message dit "message pictogramme".

Ainsi, le dispositif centralisé d'aide à la rédaction selon l'invention est utilisé selon un mécanisme connu de type client/serveur.

En conséquence, il ne nécessite pas d'installer de logiciel ni de bibliothèque de symboles et pictogrammes sur les micro-ordinateurs des utilisateurs.

La mise à disponibilité des nouveaux pictogrammes se fait aussi très simplement par mise à jour de la base de données au niveau du serveur.

Lorsqu'un utilisateur souhaite rédiger un message pictogramme, il lui suffit d'envoyer une requête à destination du dispositif centralisé pour recevoir les symboles pouvant être insérés dans son message, y compris les derniers pictogrammes et symboles nouvellement disponibles.

Préférentiellement, le dispositif centralisé d'aide à la rédaction comporte des moyens de sélection des éléments symboliques dans la base de données en fonction d'une date ou de tout autre type d'événement exceptionnel (promotion commerciale,....).

Par exemple, des pictogrammes illustrant des messages de bonne année sont proposés en fin d'année, ces pictogrammes étant susceptibles d'être choisis par l'utilisateur pour la rédaction de son message.

Cette variante permet également de n'envoyer vers le poste client que les symboles préférés de l'utilisateur, ce qui permet de limiter le trafic sur le réseau de télécommunications entre le serveur et le poste client.

Selon une autre variante, le dispositif centralisé d'aide à la rédaction selon l'invention comporte une zone de mémorisation d'un profil de l'utilisateur et des moyens de sélection des éléments symboliques dans la base de données, en fonction de ce profil.

L'invention concerne également un serveur dans un réseau de télécommunications comportant un dispositif centralisé d'aide à la rédaction tel que décrit précédemment :
- une base de données associant un format de message à au moins un utilisateur dudit serveur ;
- des moyens de réception d'un message pictogramme en provenance d'un poste client, ledit message pictogramme comportant une adresse d'un utilisateur destinataire dudit message et au moins un élément symbolique préalablement envoyé audit poste client par ledit dispositif d'aide ;
- des moyens de conversion dudit message pictogramme selon le format associé audit destinataire dans ladite base de données ; et
- des moyens d'envoi audit destinataire dudit message converti par lesdits moyens de conversion.

Ce serveur convertit ainsi le message pictogramme en utilisant un format préféré du destinataire de ce message pictogramme.

Cette caractéristique permet ainsi l'envoi d'un message pictogramme non seulement vers un ordinateur personnel du destinataire mais également sous forme d'un message vocal, d'un courrier électronique, d'un SMS, d'un MMS ou d'un SMS fixe.

Préférentiellement, le serveur selon l'invention comporte également des moyens d'impression du message pictogramme, ce qui permet d'envoyer le message pictogramme par courrier postal traditionnel à son destinataire.

Dans une variante préférée de réalisation, le serveur selon l'invention comporte des moyens de mémorisation d'une liste des éléments symboliques reçus par le serveur dans des messages pictogrammes en provenance d'un utilisateur, les moyens de sélection du dispositif centralisé de rédaction étant adaptés à sélectionner les éléments symboliques, en fonction du contenu de cette liste, préalablement à son envoi vers le poste client de cet utilisateur.

Le serveur met ainsi en oeuvre un mécanisme d'apprentissage progressif des choix de l'utilisateur, ce qui permet de lui proposer prioritairement les symboles préférés pour la rédaction des futurs messages pictogrammes.

Selon un autre aspect, l'invention concerne également un dispositif centralisé de traduction d'au moins une partie d'un message, le dispositif étant susceptible d'être incorporé dans un serveur relié à un réseau de télécommunications.

Le dispositif de traduction selon l'invention est caractérisé en ce qu'il comporte :
- une base de données associant un élément symbolique de substitution à au moins un élément de référence dans lesquels :

- l'élément symbolique de substitution comprend au moins un élément choisi parmi un pictogramme, une image, une photographie ou un message sonore ; et
- l'élément de référence comprend au moins un élément choisi parmi un mot, un pictogramme, une image, une photographie ou un message sonore ;
- des moyens d'obtention du message, en vue de sa traduction, sur réception d'une requête en provenance d'un poste client connecté au réseau ;
- des moyens de recherche, dans le message, des parties du message correspondant à un élément de référence de ladite base de données ;
- des moyens de création d'un message dit "message pictogramme" correspondant au message à traduire et dans lequel chacune des parties identifiées par les moyens de recherche est remplacée par l'élément symbolique de substitution associé à cette partie dans la base de données ; et
- des moyens d'envoi du message pictogramme à destination du poste client, préférentiellement sous forme d'une page Web, en utilisant un protocole de communication de type HTTP .

Un tel dispositif permet ainsi de substituer certains mots d'un message contenant du texte, par exemple un courrier électronique traditionnel, par des éléments symboliques sous forme de pictogrammes, d'images, de photographies ou d'un message sonore.

Ce dispositif facilite ainsi la lecture d'un courrier électronique par une personne souffrant d'analphabétisation.

Il permet en outre une traduction dite "inter-langage pictographique", en ce qu'il autorise la substitution d'un pictogramme constituant un élément de référence du message par un élément symbolique constitué soit par un autre pictogramme, soit par une image, une photographie ou un message sonore.

Dans un mode préféré de réalisation, les moyens d'obtention du dispositif centralisé de traduction selon l'invention sont adaptés à obtenir le message à partir d'une boîte à lettres d'un utilisateur du poste client dans un serveur de messagerie du réseau.

Un tel dispositif permet ainsi la traduction d'un courrier électronique sous forme de texte, à l'aide de pictogrammes et autres symboles avant la diffusion à son destinataire.

Le dispositif centralisé de traduction selon l'invention peut aussi être incorporé dans un serveur selon l'invention tel que décrit précédemment.

Dans un mode préféré de réalisation, le serveur de traduction selon l'invention comporte un annuaire des utilisateurs du système, cet annuaire étant accessible à partir d'un poste client dudit réseau de télécommunications.

Corrélativement, l'invention concerne un procédé de rédaction d'un message à partir d'un poste client d'un réseau de télécommunications, ce procédé de rédaction étant caractérisé en ce qu'il comporte :
- une étape d'envoi, par le poste client, d'une requête, à destination d'un serveur connecté au réseau ;
- une étape d'envoi, au poste client, par le serveur et sur réception de cette requête, d'au moins un élément symbolique comprenant au moins un pictogramme, une image, une photographie ou un élément sonore ; et
- une étape de création du message au cours de laquelle un utilisateur du poste client insère cet élément symbolique ledit message.

L'invention vise aussi un procédé centralisé de traduction d'au moins une partie d'un message, ce procédé étant susceptible d'être mis en oeuvre par un serveur relié à un réseau de télécommunications et étant caractérisé en ce qu'il comporte :
- une étape d'envoi, par un poste client du réseau, d'une requête de traduction du message à destination du serveur ;
- une étape d'obtention du message par le serveur sur réception de la requête ;
- une étape de recherche dans le message, par le serveur, des parties du message correspondant à un élément de référence d'une base de données du serveur, cet élément de référence comprenant au moins un élément choisi parmi un mot, un pictogramme, une image, une photographie ou un message sonore ;
- une étape de création, par le serveur, d'un deuxième message dit "message pictogramme" correspondant au message à traduire et dans lequel chacune des parties identifiées au cours de l'étape de recherche est remplacée par un élément symbolique de substitution associé à cette partie dans la base de données, cet élément symbolique de substitution comprenant au moins un élément choisi parmi un pictogramme, une image, une photographie ou un message sonore ; et
- une étape d'envoi, par le serveur, du message pictogramme à destination dudit poste client.

L'invention vise également un procédé de transmission d'un message pictogramme susceptible d'être mis en oeuvre dans un serveur d'un réseau de télécommunications et caractérisé en ce qu'il comporte :
- une étape de réception d'un message pictogramme en provenance d'un poste client, ce message pictogramme comportant une adresse d'un utilisateur destinataire du message, et ayant été obtenu par la mise en oeuvre d'un procédé de rédaction tel que décrit brièvement ci-dessus ;
- une étape d'obtention, à partir d'une base de données du serveur, d'un format associé à destinataire du message pictogramme ;
- une étape de conversion du message pictogramme selon ce format ; et
- une étape d'envoi du message pictogramme au destinataire.

Les avantages des procédés de rédaction, de traduction et de diffusion sont semblables à ceux décrits précédemment en référence au dispositif centralisé de traduction et au dispositif centralisé d'aide à la rédaction et ne seront pas rappelés ici.

D'autres aspects et avantages de la présente invention apparaîtront plus clairement à la lecture de la description de modes particuliers de réalisation qui vont suivre, cette description étant donnée uniquement à titre d'exemples non limitatifs et faite en référence aux dessins annexés, dans lesquels :
- la figure 1 représente un dispositif centralisé d'aide à la rédaction conforme à l'invention, dans un mode préféré de réalisation ;
- la figure 2 représente un dispositif centralisé de traduction conforme à l'invention, dans un mode de réalisation préféré ;
- la figure 3 représente un serveur conforme à l'invention, dans un mode de réalisation préféré ;
- la figure 4 représente, sous forme d'organigramme, les principales étapes d'un procédé de rédaction conforme à l'invention, dans un mode de réalisation préféré ;
- la figure 5 représente, sous forme d'organigramme, les principales étapes d'un procédé centralisé de traduction, conforme à l'invention dans un mode préféré de réalisation ; et
- la figure 6 représente, sous forme d'organigramme, les principales étapes d'un procédé de transmission, conforme à l'invention dans un mode de réalisation préféré.

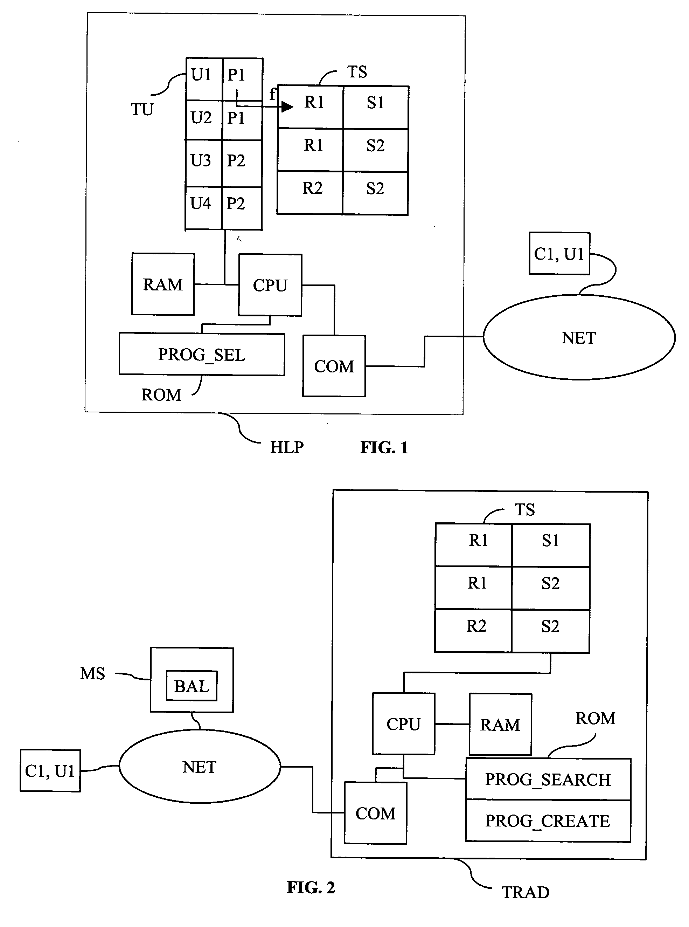

**La figure 1** représente un dispositif HLP centralisé d'aide à la rédaction d'un message conforme à la présente invention dans un mode préféré de réalisation.

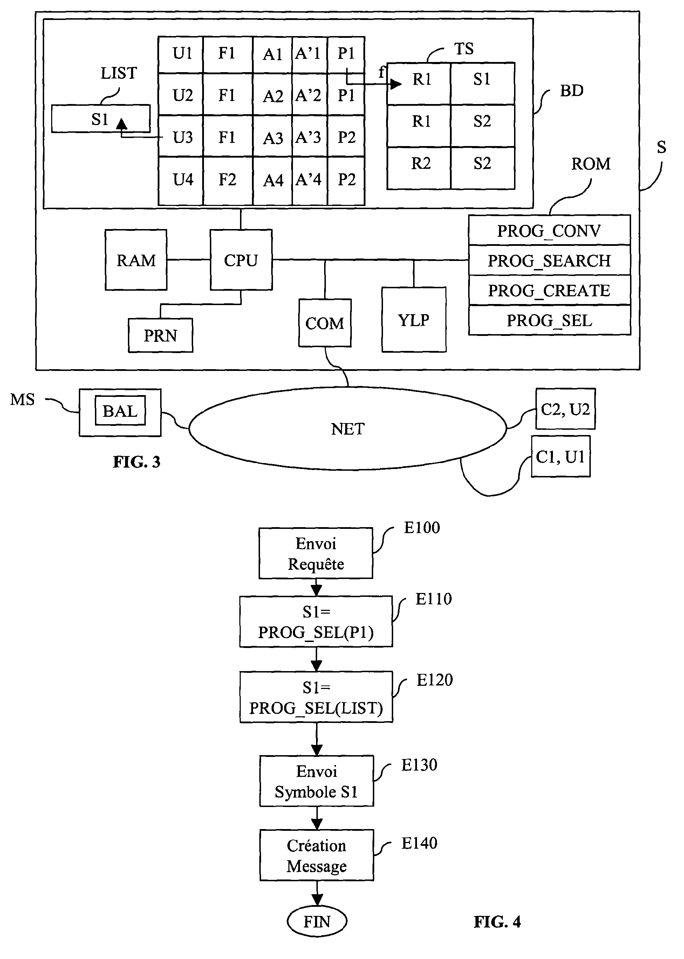

Ce dispositif centralisé d'aide à la rédaction HLP peut être incorporé dans un serveur S relié à un réseau de communications NET tel que décrit ultérieurement en référence à la figure 3.

Il peut aussi être directement relié au réseau de télécommunications NET comme représenté à la figure 1.

Ce dispositif centralisé d'aide à l'arrêt d'action HLP comporte des moyens COM de communication avec d'autres équipements C1 du réseau NET.

Dans le mode préféré de réalisation décrit ici, ces moyens de communication COM sont constitués à la fois par des éléments matériels, par exemple une carte réseau, et par des moyens logiciels pour la mise en oeuvre de protocoles standards de type HTTP.

Ces moyens de communication COM sont en particulier adaptés à recevoir une requête en provenance d'un poste client C1 connecté au réseau NET.

Le dispositif centralisé d'aide à la rédaction HLP comporte également une base de données TS qui mémorise des éléments symboliques S1, S2.

Ces éléments symboliques peuvent être constitués par des pictogrammes, des images, des photographies ou des éléments sonores.

Les moyens de communication COM sont adaptés à envoyer ces éléments symboliques vers un poste client C1 du réseau NET, par exemple dans une page web en utilisant le protocole HTTP.

Ces éléments symboliques S1, S2 peuvent être insérés dans un message dit "message pictogramme".

Le dispositif d'aide à la rédaction HLP comporte également des moyens de sélection d'un élément symbolique S1 dans la base de données TS.

Ces moyens de sélection sont, dans le mode décrit ici, constitués par un processeur CPU, un programme PROG_SEL mémorisé dans une mémoire morte ROM et de la mémoire vive RAM nécessaire à l'exécution du programme PROG_SEL.

Ce programme de sélection PROG_SEL est adapté à sélectionner un symbole dont la base de données TS en fonction d'une date ou d'un autre type d'événement exceptionnel (Noël, voeux de fin d'année, ...).

A cet effet, le programme de sélection PROG_SEL coopère avec un calendrier non représenté ici.

Dans le mode préféré de réalisation décrit ici, le dispositif centralisé d'aide à la rédaction HLP comporte une zone TU de mémorisation d'un profil P1, P2 des utilisateurs U1 à U4 de ce dispositif.

Ces profils P1, P2 définissent des paramètres d'utilisation de ce dispositif HLP et notamment des options pouvant être associées aux éléments symboliques S1, S2.

Par exemple, un profil P1 peut être choisi par des utilisateurs U1 et U2, ce profil permettant de définir que chacun des symboles S1, S2 reçus par l'utilisateur U1 (ou U2) en provenance du dispositif d'aide à la rédaction HLP sera associé avec un texte ou un message sonore, ces éléments symboliques étant en outre organisés dans la page web précitée d'une façon préférée, par exemple par ordre alphabétique ou par thème.

Dans ce mode préféré de réalisation, le programme de sélection PROG_SEL est adapté à choisir l'élément symbolique S1 envoyé à l'utilisateur U1 en fonction de son profil P1.

A cet effet, le programme de sélection PROG_SEL recherche un lien relationnel f existant entre le profil P1 d'un utilisateur U1 et la base de données TS comportant les éléments symboliques S1, S2.

Ainsi, en supposant que le profil P1 définisse que seuls les éléments symboliques S1, S2 associés à un message vocal doivent être délivrés aux utilisateurs U1, U2 ayant ce profil P1, le programme de sélection PROG_SEL ne sélectionnera que de tels symboles préalablement à leur envoi vers le poste client C1 de l'utilisateur U1.

**La figure 2** représente un dispositif centralisé de traduction TRAD conforme à l'invention dans un mode préféré de réalisation.

Ce dispositif centralisé de traduction TRAD comporte des moyens de communication COM identiques à ceux décrits précédemment en référence à la figure 1.

Le dispositif centralisé de traduction TRAD comporte également une base de données TS associant à des éléments de référence R1, R2, des éléments symboliques de substitution S1, S2 tels que décrits précédemment, en référence à la figure 1.

Ces éléments de référence R1, R2 comprennent au moins un élément choisi parmi un mot, un pictogramme, une image, une photographie ou un message sonore.

Conformément à la présente invention, le dispositif centralisé de traduction TRAD comporte des moyens de recherche (constitués par le processeur CPU, la mémoire vive RAM et un programme de recherche PROG_SEARCH), des parties d'un message correspondant à des éléments de référence R1, R2 de la base de données TS.

Par exemple, si le mot "SAPIN" est un élément de référence de la base de données TS, le programme de recherche PROG_SEARCH permettra de retrouver toutes les occurrences du mot "SAPIN" dans un message reçu par le serveur de traduction TRAD.

Le dispositif de traduction TRAD comporte également des moyens de création constitués notamment par un programme PROG_CREATE d'un message dit "message pictogramme" correspondant au message à traduire et dans lesquels chacune des parties identifiée par le programme de recherche PROG_SEARCH est remplacée par l'élément symbolique de substitution associé à cette partie dans la base de données TS.

Ainsi, en supposant qu'un élément de substitution sous la forme d'une photographie d'un sapin de Noël est associé à l'élément de référence "SAPIN" dans la base de données TS, le message pictogramme correspondra au message d'origine dans lequel chaque occurrence du mot "SAPIN" est remplacée par l'image précitée représentant un sapin.

Les moyens de communication du dispositif centralisé de traduction TRAD sont également adaptés à envoyer le message pictogramme à destination d'un poste client C1, préférentiellement sous forme d'une page web en utilisant le protocole de communication HTTP.

Plusieurs modes de réalisation peuvent être envisagés pour l'obtention du message à traduire par les moyens d'obtention COM du dispositif de traduction TRAD.

Par exemple, ce message peut être envoyé par courrier électronique depuis le poste client C1 vers le dispositif de traduction TRAD.

Dans un mode préféré de réalisation, les moyens d'obtention COM obtiennent ce message à partir d'une boîte à lettres BAL d'un utilisateur U1 du poste client C1, cette boîte à lettres BAL étant hébergée dans un serveur de messagerie MS du réseau NET.

A cet effet, les moyens de communications COM sont adaptés à s'adresser au serveur de messagerie MS en utilisant les protocoles POP3 et IMAP connus de l'homme du métier.

Ainsi, ce dispositif de traduction permet de remplacer, dans un courrier électronique standard, toutes les occurrences d'un mot par un symbole visuel ou sonore.

Comme précisé ci-dessus, les éléments de référence R1, R2 peuvent aussi être constitués par des pictogrammes, une image, une photographie ou un message sonore.

Ainsi, le dispositif de traduction TRAD permet de substituer un pictogramme par un autre si un élément de référence R1 constitué par un pictogramme est associé dans la base de données TS à un autre pictogramme S1.

**La figure 3** représente un serveur S conforme à l'invention dans un réseau de télécommunications.

Conformément à la présente invention, le serveur S comporte un dispositif centralisé d'aide à la rédaction conforme à l'invention.

Dans ce mode de réalisation, la base de données D et la zone de mémorisation TU du dispositif d'aide à la rédaction sont incorporées dans une base de données BD plus générale du serveur S.

De même, le programme de sélection PROG_SEL faisant partie des moyens de sélection du dispositif centralisé d'aide à la rédaction sont mémorisés dans une mémoire morte ROM du serveur S.

Le serveur S comporte en outre un processeur CPU, une mémoire vive RAM et des moyens de communication COM qui sont utilisés par son dispositif centralisé d'aide à la rédaction. Les moyens de communication COM du serveur S sont identiques à ceux décrits précédemment en référence aux figures 1 et 2.

Ils sont entre autres adaptés à recevoir un message pictogramme en provenance d'un poste client C1 du réseau de télécommunications NET.

Ce message pictogramme comporte une adresse A2 d'un utilisateur destinataire U2 de ce message et au moins un élément symbolique S1, S2 préalablement envoyé au poste client C1 par le dispositif centralisé d'aide incorporé dans ce serveur S.

Conformément à l'invention, la base de données BD du serveur S introduite ci-dessus associe en outre un format de message F1, F2 à au moins un utilisateur du serveur S.

Le serveur S comporte également des moyens de conversion sous la forme du processeur CPU, de la mémoire vive RAM et d'un programme de conversion PROG_CONV mémorisé dans la mémoire morte ROM et adapté à convertir le message pictogramme reçu par les moyens de réception précités selon le format F1 associé au destinataire U2 dans la base de données BD.

Les moyens de communication COM du serveur S constituent également des moyens d'envoi au destinataire U2 du message converti par les moyens de conversion, comme décrits ci-dessus.

Plusieurs formats peuvent être utilisés par le serveur S pour convertir un message pictogramme préalablement à son envoi au destinataire U2.

En particulier, le programme de conversion est adapté à convertir le message pictogramme dans un format compatible à l'envoi d'un message vocal par téléphone, d'un courrier électronique (format e-mail), d'un message conforme à la norme SMS, à la norme MMS ou à la norme SMS fixe.

Ces formats sont connus de l'homme du métier, ainsi que l'infrastructure réseau nécessaire à l'acheminement d'un message selon l'un quelconque de ces formats.

En conséquence, les routeurs, passerelles, serveurs et protocoles mis en oeuvre pour l'acheminement de ces messages vers l'équipement C2 de l'utilisateur U2 ne seront pas décrits ici.

Le serveur S décrit ici comporte également un dispositif centralisé de traduction conforme à l'invention.

Dans le mode de réalisation décrit ici, la base de données TS du dispositif de traduction fait partie de la base de données BD du serveur S.

De même, les moyens de communication COM du dispositif centralisé de traduction sont constitués par les moyens matériels et logiciels de communication COM du serveur S.

De même, le processeur CPU, la mémoire vive RAM et la mémoire morte ROM comportant les programmes PROG_SEARCH et PROG_CREATE décrits en référence à la figure 2, constituent les moyens de recherche et de création du dispositif de traduction du serveur S.

De plus, et préférentiellement, le serveur S comporte, des moyens d'impression PRN permettant d'imprimer le message pictogramme reçu par le serveur S préalablement à son envoi par courrier postal à un destinataire U2 de ce message, lorsque celui-ci a choisi un format F2 de réception sous forme d'un document imprimé.

Dans le mode préféré de réalisation décrit ici, le serveur S comporte également une liste LIST qui comporte les éléments symboliques insérés dans des messages pictogrammes reçus par le serveur S en provenance d'un utilisateur donné.

Ainsi, dans l'exemple de la figure 3, la liste LIST mémorise le fait que le serveur S a précédemment reçu un message pictogramme en provenance de l'utilisateur U3, ce message pictogramme contenant le symbole S1.

Dans ce mode de réalisation, les moyens de sélection CPU, RAM, ROM et PROG_SEL du dispositif centralisé de rédaction du serveur S sont adaptés à sélectionner l'élément symbolique en fonction du contenu de cette liste LIST préalablement à son envoi vers le poste client C1 de l'utilisateur U1.

Ainsi, lorsque l'utilisateur U3 sollicitera le serveur S pour la rédaction d'un nouveau message pictogramme, le serveur S lui proposera préférentiellement le symbole S1.

Cette fonction d'apprentissage permet ainsi de personnaliser dynamiquement le contenu des pages contenant les pictogrammes et autres symboles d'aide à la rédaction, en fonction des préférences des utilisateurs.

Dans le mode de réalisation décrit ici, le serveur S comporte également un annuaire YLP des utilisateurs de ce serveur.

**La figure 4** représente les principales étapes E100 à E140 d'un procédé de rédaction d'un message conforme à la présente invention dans un mode préféré de réalisation.

On supposera dans cet exemple qu'un utilisateur U1 d'un poste client C1 du réseau de télécommunications NET souhaite rédiger un message contenant des pictogrammes ou des images et des messages sonores.

Au cours d'une première étape E100, le poste client C1 envoie une requête à destination d'un serveur S connecté au réseau NET.

Ce serveur S peut par exemple être conforme à celui décrit précédemment en référence à la figure 3.

Dans un mode préféré de réalisation, la requête est constituée par un message informatique reçu par le serveur S lorsque l'utilisateur U1 du poste client C1 se connecte à une page d'accueil au format HTML du serveur S.

Dans un premier mode de réalisation, sur réception de cette requête, le serveur S envoie au poste client C1 l'ensemble des éléments symboliques S1, S2 mémorisés par le serveur S, ces éléments symboliques comprenant, comme déjà décrit, au moins un pictogramme, une image, une photographie ou un élément sonore.

Préférentiellement cependant, le procédé de rédaction conforme à l'invention comporte à l'issue de l'étape E100 d'envoi d'une requête, une étape E110, au cours de laquelle le serveur S sélectionne au cours d'une étape E120, au moins un élément symbolique, en fonction d'un profil de l'utilisateur U1, ce profil étant mémorisé par le serveur S.

Dans une autre variante préférée, compatible avec la variante décrite ci-dessus, le serveur S sélectionne au cours d'une deuxième étape de sélection E130 consécutive à la première étape de sélection E120, un élément symbolique S1 en fonction des éléments symboliques déjà reçus dans des messages pictogrammes en provenance de l'utilisateur U1.

Ces deux variantes préférées ont été décrites précédemment en référence à la description du serveur S de la figure 3.

Quoi qu'il en soit, les éléments symboliques S1, S2 sélectionnés par le serveur S sont envoyés au cours d'une étape E130 au poste client C1, préférentiellement dans une page web en utilisant le protocole HTTP.

Sur réception de cette page web dont l'agencement peut être choisi en fonction du profil P1 de l'utilisateur U1, l'utilisateur U1 crée, au cours d'une étape E140, un message en insérant au moins un des pictogrammes reçus au cours de l'étape précédente E130.

Cette étape E140 de création d'un message termine le procédé de rédaction d'un message selon l'invention.

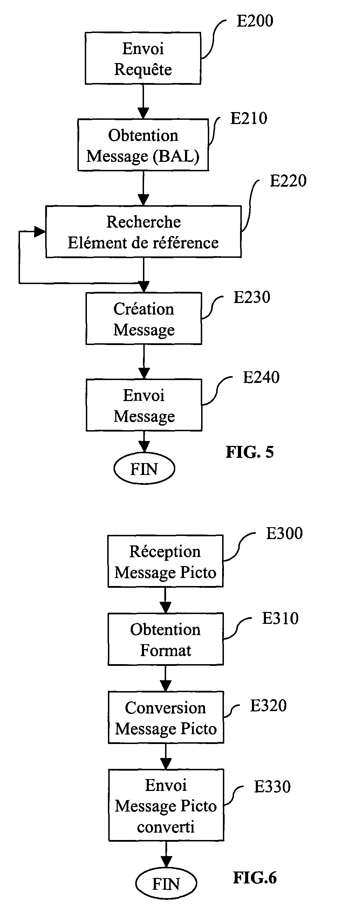

**La figure 5** représente les principales étapes E200 à E240 d'un procédé centralisé de traduction conforme à l'invention dans un mode préféré de réalisation.

Dans l'exemple décrit ici, on supposera qu'un utilisateur U1 a reçu un courrier électronique, ce courrier électronique étant mémorisé dans une boîte aux lettres BAL de cet utilisateur dans un serveur MS de messagerie du réseau NET et désire effectuer une traduction de ce message.

Cette traduction peut consister à remplacer des mots de ce courrier électronique par des symboles, à savoir des pictogrammes, des images, photographies ou par un message sonore mais aussi à substituer des pictogrammes et symboles de ce message par d'autres pictogrammes et symboles préférés de l'utilisateur U1.

Ce procédé de traduction peut être mis en oeuvre dans un serveur S du réseau NET tel que décrit précédemment en référence à la figure 3.

Au cours d'une première étape E200, le poste client C1 de l'utilisateur U1 envoie une requête de traduction du message à destination du serveur S.

L'étape E200 d'envoi de la requête est suivie par une étape E210 d'obtention du message par le serveur S sur réception de cette requête.

Dans l'exemple décrit ici, cette étape d'obtention E210 consiste à obtenir le message à traduire à partir de la boîte aux lettres BAL de l'utilisateur U1 depuis le serveur de messagerie MS du réseau NET.

L'obtention proprement dite de ce courrier électronique est connue de l'homme du métier et ne sera pas décrite ici.

L'étape E210 d'obtention du message est suivie par une boucle E220 au cours de laquelle le serveur S recherche dans le courrier électronique les parties de ce courrier électronique correspondant à un élément de référence R1, R2 d'une base de données BD du serveur S.

Cette étape de recherche est semblable à celle décrite en référence à la figure 3, c'est-à-dire telle que mise en oeuvre par le programme PROG_SEARCH des moyens de recherche du serveur S.

Lorsque toutes les parties du courrier électronique correspondant à un élément de référence compris dans la base de données BD du serveur S, la boucle constituée par l'étape E220 se termine.

Cette boucle est suivie par une étape E230 au cours de laquelle le serveur S crée un message pictogramme. Cette étape de création peut être mise en oeuvre par le programme PROG_CREATE décrit précédemment en référence à la figure 3.

L'étape E230 de création du message pictogramme est suivie par une étape E240 au cours de laquelle le serveur S envoi le message pictogramme à destination du poste client C1.

L'étape E240 d'envoi du message termine le procédé centralisé de traduction décrit ici.

**La figure 6** représente les principales étapes E300 à E330 d'un procédé de transmission d'un message pictogramme conforme à l'invention dans un mode préféré de réalisation.

On supposera que ce procédé de transmission est mis en oeuvre dans un serveur S conforme à celui décrit à la figure 3.

Dans le mode de réalisation décrit ici, le procédé de transmission comporte une première étape E300 de réception d'un message pictogramme en provenance d'un poste client C1 du réseau NET, ce message pictogramme comportant l'adresse A2 d'un utilisateur U2 destinataire de ce message ; ce message ayant été créé par la mise en oeuvre d'un procédé de rédaction tel que décrit précédemment en référence à la figure 5.

L'étape E300 de réception du message pictogramme est suivie par une étape E310 au cours de laquelle le serveur S obtient, à partir de la base de données BD de ce serveur, un format F1 associé à l'utilisateur U2 destinataire du message pictogramme.

L'étape E310 d'obtention du format est suivie par une étape E320 au cours de laquelle le serveur S convertit le message pictogramme en fonction du format F1 obtenu à l'étape précédente.

Conformément à l'invention, ce format peut être adapté à l'envoi d'un message vocal, d'un courrier électronique ou d'un message conforme aux normes SMS, MMS et SMS fixes.

Optionnellement, le procédé de transmission comporte une étape E325 d'impression du message pictogramme. Cette étape connue de l'homme du métier n'est pas représentée à la figure 6.

Quoi qu'il en soit, à l'issue de l'étape d'impression E325 et/ou de l'étape de conversion E320, le serveur S envoie le message pictogramme converti au destinataire U2, au cours d'une étape E330.

A cet effet, il utilise une adresse A'2 compatible avec le format F1 et mémorisée dans la base de données BD du serveur S.

L'étape E330 termine le procédé de transmission conforme à l'invention dans ce mode de réalisation.

## Revendications

1. Dispositif centralisé d'aide à la rédaction d'un message, ledit dispositif d'aide étant susceptible d'être incorporé dans un serveur (S) relié à un réseau de télécommunications (NET), le dispositif d'aide (HLP) étant
**caractérisé en ce qu'**il comporte :
- des moyens (COM) de réception d'une requête en provenance d'un poste client (C1) connecté audit réseau (NET) ;
- une base de données (TS, BD) comportant au moins un élément symbolique (S1, S2) comprenant au moins un pictogramme, une image, une photographie ou un élément sonore ;
- des moyens (COM) d'envoi vers ledit poste client (C1) et, sur réception de ladite requête d'au moins un desdits éléments symboliques (S1), ledit élément symbolique pouvant (S1) être inséré par un utilisateur (U1) dudit poste client (C1) dans un message dit "message pictogramme".

2. Dispositif centralisé d'aide à la rédaction selon la revendication 1, **caractérisé en ce qu'**il comporte des moyens de sélection (CPU, ROM, RAM, PROG_SEL) dudit élément symbolique (S1) dans ladite base de données (TS, BD), en fonction d'une date ou de tout autre type d'événement exceptionnel.

3. Dispositif centralisé d'aide à la rédaction selon la revendication 1 ou 2, **caractérisé en ce qu'**il comporte une zone (TU, BD) de mémorisation d'un profil (P1) dudit utilisateur (U1) et des moyens de sélection (CPU, ROM, RAM, PROG_SEL) dudit au moins un élément symbolique (S1) dans ladite base de données (TS, BD), en fonction (f) dudit profil (P1).

4. Dispositif centralisé de traduction d'au moins une partie d'un message, ledit dispositif étant susceptible d'être incorporé dans un serveur (S) relié à un réseau de télécommunications (NET), le dispositif de traduction (TRAD) étant **caractérisé en ce qu'**il comporte :
- une base de données (TS, BD) associant un élément symbolique de substitution (S1, S2) à au moins un élément de référence (R1, R2), dans lesquels :
- ledit élément symbolique de substitution (S1, S2) comprend au moins un élément choisi parmi un pictogramme, une image, une photographie ou un message sonore ; et
- ledit élément de référence (R1, R2) comprend au moins un élément choisi parmi un mot, un pictogramme, une image, une photographie ou un message sonore ;
- des moyens (COM) d'obtention dudit message en vue de sa traduction, sur réception d'une requête en provenance d'un poste client (C1) connecté audit réseau (NET) ;
- des moyens de recherche (CPU, ROM, RAM, PROG_SEARCH) dans ledit message, des parties dudit message correspondant à un élément de référence (R1, R2) de ladite base de données (BD, TS) ;
- des moyens de création (CPU, PROG_CREATE, ROM, RAM) d'un message dit "message pictogramme" correspondant audit message à traduire et dans lequel chacune desdites parties (R1 ) identifiée par lesdits moyens de recherche (CPU, ROM, RAM, PROG_SEARCH) est remplacée par ledit élément symbolique de substitution (S1) associé à cette partie (R1) dans ladite base de données (BD, TS) ; et
- des moyens d'envoi (COM) dudit message pictogramme à destination dudit poste client (C1), préférentiellement sous forme d'une page Web, en utilisant un protocole de communication de type HTTP.

5. Dispositif centralisé de traduction selon la revendication 4, **caractérisé en ce que** lesdits moyens d'obtention (COM) sont adaptés à obtenir ledit message à partir d'une boîte à lettres (BAL) d'un utilisateur (U1) dudit poste client (C1) dans un serveur de messagerie (MS) dudit réseau (NET).

6. Serveur dans un réseau de télécommunications, **caractérisé en ce qu'**il comporte :
- un dispositif centralisé d'aide à la rédaction conforme à l'une quelconque des revendications 1 à 3 ;
- une base de données (BD) associant un format (F1) de message à au moins un utilisateur (U1) dudit serveur (S1) ;
- des moyens (COM) de réception d'un message pictogramme en provenance d'un poste client (C1), ledit message pictogramme comportant une adresse (A2) d'un utilisateur (U2) destinataire dudit message et au moins un élément symbolique (S1) préalablement envoyé audit poste client (C1 ) par ledit dispositif d'aide ;
- des moyens (CPU, ROM, RAM, PROG_CONV) de conversion dudit message pictogramme selon le format (F1) associé audit destinataire (U2) dans ladite base de données (BD) ; et
- des moyens(COM) d'envoi audit destinataire(U2) dudit message converti par lesdits moyens de conversion.

7. Serveur selon la revendication 6, **caractérisé en ce qu'**il comporte des moyens de mémorisation d'une liste (LIST) des éléments symboliques (S1), reçus par le serveur (S), dans des messages pictogrammes en provenance dudit utilisateur (U3), et **en ce que** les moyens de sélection (CPU, ROM, RAM, PROG_SEL) dudit dispositif centralisé de rédaction sont adaptés à sélectionner ledit au moins un élément symbolique (S1), en fonction du contenu de ladite liste (LIST) préalablement à son envoi vers le poste client dudit utilisateur (U3).

8. Serveur selon la revendication 7, **caractérisé en ce que** lesdits moyens de conversion (CPU, ROM, RAM, PROG_CONV) sont adaptés à convertir ledit message pictogramme dans l'un desdits formats suivants :
- message vocal ;
- courrier électronique ;
- format conforme à la norme SMS ;
- format conforme à la norme MMS ; ou
- format SMS fixe.

9. Serveur selon la revendication 7 ou 8, **caractérisé en ce qu'**il comporte en outre des moyens (PRN) d'impression dudit message pictogramme.

10. Serveur selon l'une quelconque des revendications 6 à 9, **caractérisé en ce qu'**il comporte en outre un dispositif centralisé de traduction selon la revendication 3 ou 4.

11. Serveur selon l'une quelconque des revendications 6 à 10, **caractérisé en ce qu'**il comporte un annuaire (YLP) des utilisateurs dudit serveur (S), cet annuaire étant accessible à partir d'un poste client dudit réseau de télécommunications.

12. Procédé de rédaction d'un message à partir d'un poste client (C1) d'un réseau de télécommunications (NET), **caractérisé en ce qu'**il comporte :
- une étape d'envoi (E100) par ledit poste client (C1), d'une requête, à destination d'un serveur (S) connecté audit réseau (NET) ;
- une étape (E130) d'envoi audit poste client (C1) par ledit serveur (S) et sur réception de ladite requête d'au moins un élément symbolique (S1) comprenant au moins un pictogramme, une image, une photographie ou un élément sonore ; et
- une étape (E140) de création dudit message au cours de laquelle un utilisateur (U1) dudit poste client (C1) insère ledit au moins un élément symbolique (S1) ledit message.

13. Procédé de rédaction selon la revendication 12, **caractérisé en ce qu'**il comporte en outre une étape (E110) de sélection par ledit serveur (C1) dudit au moins un élément symbolique (S1) en fonction d'un profil (P1) dudit utilisateur (U1) mémorisé dans ledit serveur (S).

14. Procédé de rédaction selon la revendication 12 ou 13, **caractérisé en ce qu'**il comporte en outre une étape (E120) de sélection par ledit serveur (S) dudit au moins un élément symbolique (S1) en fonction des éléments symboliques (S1) insérés par ledit utilisateur dans des messages pictogrammes précédents.

15. Procédé centralisé de traduction d'au moins une partie d'un message, ledit procédé étant susceptible d'être mis en oeuvre par un serveur (S) relié à un réseau de télécommunications (NET), et étant **caractérisé en ce qu'**il comporte :
- une étape (E200) d'envoi, par un poste client (C1) dudit réseau (NET), d'une requête de traduction dudit message à destination dudit serveur (S) ;
- une étape (E120) d'obtention dudit message par ledit serveur (S) sur réception de ladite requête ;
- une étape (E220) de recherche dans ledit message, par ledit serveur (S) des parties dudit message correspondant à un élément de référence (R1) d'une base de données (BD) dudit serveur (S), ledit élément de référence (R1) comprenant au moins un élément choisi parmi un mot, un pictogramme, une image, une photographie ou un message sonore ;
- une étape (E230) de création, par ledit serveur, d'un message "message pictogramme" correspondant audit message à traduire et dans lequel chacune desdites parties identifiées au cours de ladite étape (E220) de recherche est remplacée par un élément symbolique de substitution (S1) associé à cette partie (R1) dans ladite base de données (BD), ledit élément symbolique de substitution (S1) comprenant au moins un élément choisi parmi un pictogramme, une image, une photographie ou un message sonore ; et
- une étape (E240) d'envoi par ledit serveur dudit message pictogramme à destination dudit poste client.

16. Procédé centralisé de traduction selon la revendication 15, **caractérisé en ce qu'**au cours de ladite étape (E210) d'obtention, on obtient ledit message à partir d'une boîte à lettres (BAL) d'un utilisateur (U1) dudit poste client (C1) dans un serveur de messagerie (MS) dudit réseau (NET).

17. Procédé de transmission d'un message pictogramme susceptible d'être mis en oeuvre dans un serveur (S) d'un réseau de télécommunications (NET), **caractérisé en ce qu'**il comporte :
- une étape (E300) de réception d'un message pictogramme en provenance d'un poste client (C1), ledit message pictogramme comportant une adresse (A2) d'un utilisateur (U2) destinataire dudit message et ayant été créé par la mise en oeuvre d'un procédé de rédaction conforme à l'une quelconque des revendications 12 à 14 ;
- une étape (E310) d'obtention à partir d'une base de données (BD) dudit serveur (S) d'un format (F1) associé à destinataire (U2) dudit message pictogramme ;
- une étape (E320) de conversion dudit message pictogramme selon ledit format (F1) ;
- une étape (E330) d'envoi dudit message pictogramme audit destinataire.

18. Procédé de transmission selon la revendication 17, **caractérisé en ce que**, au cours de ladite étape (E320) de conversion, on convertit ledit message pictogramme dans l'un desdits formats suivants :
- message vocal ;
- format e-mail ;
- format conforme à la norme SMS ;
- format conforme à la norme MMS ; ou
- format SMS fixe.

19. Procédé de transmission selon la revendication 17 ou 18 **caractérisé en ce qu'**il comporte en outre une étape d'impression dudit message pictogramme.
